# EUROPEAN PATENT APPLICATION

(11) **EP 1 156 084 A2**
(43) Date of publication of application: **21.11.2001**
(21) Application number: 01302847.7
(22) Date of filing: 27.03.2001
(51) Int. Cl.: C09B 23/14, C09B 23/10, G11B 7/24

(54) **Hemicyanine dyes and optical recording media using the same**

(30) Priority: 17.05.2000 KR 2647000004
(71) Applicant: SAMSUNG ELECTRONICS CO., LTD., Suwon-City, Kyungki-do (KR)
(72) Inventor: Je, Jong-tae, Gangnam-gu, Seoul (KR); Huh, Young-jae, Seongnam-city, Kyungki-do (KR); Lee, Kyu-youn, Seocho-gu, Seoul (KR)
(74) Representative: Kyle, Diana

(57) **Abstract**

A hemicyanine dye having formula (1) and an optical recording medium using the hemicyanine dye as an optical recording medium are provided: 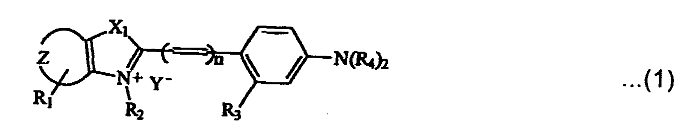 where Z is a benzene ring, naphthalene ring or anthracene ring; X₁ is S, O, Se, NR or C(CH₃)₂, where R is hydrogen or an alkyl group of 1 to 5 carbon atoms; R₁ is hydrogen, a halogen atom, an alkyl group of 1 to 3 carbon atoms, a nitro group, an alkoxy group of 1 to 3 carbon atoms or an amine group; each of R₂ and R₄ is an alkyl group of 1 to 5 carbon atoms; R₃ is H, OH, OCOCH₃ or OSO₂C₆H₄Cl; Y is Cl, Br, I, ClO₄, BF₄, BrO₄, PF₆, CH₃SO₃, CF₃SO₃, 4-CH₃C₆H₄SO₃, C₆H₅SO₃, 6-SO₃C₁₀H₆SO₃ or HSO₄; and n is an integer of 0-2. The hemicyanine dye having formula (1) above is easy to synthesize with high yield. Thus, use of the hemicyanine dye as an optical recording material in manufacturing optical recording media can reduce the manufacturing cost.

## Description

The present invention relates to hemicyanine dyes and optical recording media formed using the same, and more particularly, to hemicyanine dyes, and a write only read many (WORM) type optical recording medium capable of recording and reproducing information with radiation of laser, which employs a hemicynine dye as an optical recording material.

Optical recording media have a smaller recording area per recording unit than conventional magnetic recording media, so that use of the optical recording media as a high density recording medium is extensively increasing. Optical recording media are classified into a read only memory (ROM) type for only reading recorded information, a write once read many (WORM) type which allows only one writing, and an erasable type which allows erasing of recorded information and rewriting.

WORM type and erasable type optical recording media reproduce information by detecting variations in the reflectivity caused by physical deformation and changes in optical characteristics, and phase and magnetic properties of a recording layer before and after the recording.

A compact disk recordable (CD-R) is widely known as a WORM type optical recording medium. In addition, a variety of optical recording materials, which ensure easy manufacture of such a recording medium with improved properties, have been suggested and some of them are in use. Disclosed optical recording materials for CD-Rs include a cyanine dye (Japanese Patent Publication No. sho 58-125246), a phthalocyanine dye (European Patent No. 676,751), an azo dye (US Patent No. 5,441,844), a dye of double salt (US Patent No. 4,626,490) and a dye of azo-metal complex (US Patent No. 5,272,047).

Recently, with increased amount of information, a digital versatile disk recordable (DVD-R) with increased information storing capability has been suggested. The DVD-R adopts a red diode laser having a wavelength of 630-670 nm, as a light source, and has reduced pit size and track interval, so that its information storing capacity is 6-8 times increased with respect to CD-Rs. Examples of the optical recording media for DVD-Rs include a cyanine dye (Japanese Patent Publication Nos. hei 10-149583 and hei 9-208560), a dye of azo-metal complex (Japanese Patent Publication Nos. hei 10-157293 and hei 9-157301), and the like.

The erasable type optical recording media record and reproduce information based on the changes in phase of metal alloy. Recent approaches to the erasable optical recording media have been focused on use of the photochromic phenomenon of organic substances. Organic substances with the photochromic phenomenon include spiropyran, fulgide, dihydropyrene, thioindigo, bipyridine, aziridine, polynuclear aromatics, azobenzene, salicylideneaniline, xanthene, oxazine and the like. In particular, spiropyran, which is a typical organic substance having the photochromic phenomenon, has both colored and clear structures. The clear structure is changed into a colored structure by radiation of ultraviolet (UV) rays, and the colored structure is changed into a colorless structure by radiation of visible rays. In other words, the two structures can be reversed depending on the wavelength of radiated light.

Spiropyrane is suitable as a recording material used for erasable type optical recording media, due to its reversible structure described previously, but not for WORM type optical recording media. For this reason, application of the phorochromic substance in manufacturing WORM type optical recording media rarely appears in the related field.

According to the present invention, spiropyran, a typical photochromic substance, is adopted as a material for WORM type optical recording media, by blocking the changing of the colored structure to the clear structure by radiation of light or heat, using that the colored structure has a strong absorption band in the visible wavelength range.

In order to prevent the reversible changing of the structures, an electron donor having a stronger electron donating ability than that of a hydroxy group is further introduced into its structure, or the hydroxy group is eliminated from the structure, which hinders the reaction for the clear structure. The modified spiropyran has optical characteristics similar to those of cyanine dye, excellent solubility in organic solvent, and a decomposition temperature of 210-260°C. Also, the synthesis pathway of the modified spiropyran is simpler than the original spiropyran with high yield. Thus, the modified spiropyran can be effectively used as an inexpensive optical recording material.

To solve the above problems, it is a first objective of the present invention to provide a novel hemicyanine dye which is easy to synthesize with high yield.

A second objective of the present invention is to provide a write once read many (WORM) type optical recording medium, which can be manufactured at a reduced cost, by using the hemicyanine dye as an optical recording material.

The first objective of the present invention is achieved by a hemocyanine dye having formula (1): 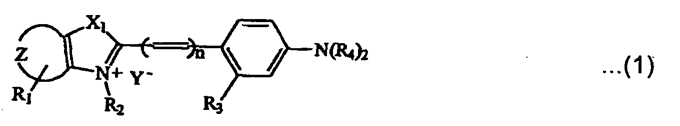 where Z is a benzene ring, naphthalene ring or anthracene ring; X₁ is S, O, Se, NR or C(CH₃)₂, where R is hydrogen or an alkyl group of 1 to 5 carbon atoms; R₁ is hydrogen, a halogen atom, an alkyl group of 1 to 3 carbon atoms, a nitro group, an alkoxy group of 1 to 3 carbon atoms or an amine group; each of R₂ and R₄ is an alkyl group of 1 to 5 carbon atoms; R₃ is H, OH, OCOCH₃ or OSO₂C₆H₄Cl; Y is Cl, Br, I, ClO₄, BF₄, BrO₄, PF₆, CH₃SO₃, CF₃SO₃, 4-CH₃C₆H₄SO₃, C₆H₅SO₃, 6-SO₃C₁₀H₆SO₃ or HSO₄; and n is an integer of 0-2.

The second objective of the present invention is achieved by an optical recording medium comprising a transparent substrate with grooves, a recording layer including a laser absorptive dye, formed over the transparent substrate, and a reflective layer and a protective layer formed over the recording layer, wherein the dye of the recording layer is a hemicyanine dye having formula (1): 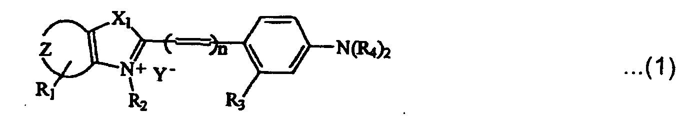 where Z is a benzene ring, naphthalene ring or anthracene ring; X₁ is S, O, Se, NR or C(CH₃)₂, where R is hydrogen or an alkyl group of 1 to 5 carbon atoms; R₁ is hydrogen, halogen atoms, an alkyl group of 1 to 3 carbon atoms, a nitro group, an alkoxy group of 1 to 3 carbon atoms or an amine group; each of R₂ and R₄ is an alkyl group of 1 to 5 carbon atoms; R₃ is H, OH, OCOCH₃ or OSO₂C₆H₄Cl; Y is Cl, Br, I, ClO₄, BF₄, BrO₄, PF₆, CH₃SO₃, CF₃SO₃, 4-CH₃C₆H₄SO₃, C₆H₅SO₃, 6-SO₃C₁₀H₆SO₃ or HSO₄; and n is an integer of 0-2.

In a hemicyanine dye having formula (1) according to the present invention, Z is a benzene ring, a naphthalene ring or an anthracene ring.

Apparently, in formula (1), the portion (I) including the ring indicated by Z represents a condensed ring formed by covalently coupling at least two atoms between a octagonal ring compound selected from the group consisting of thiazole ring, oxazole ring and imidazole ring, and one of the benzene ring, naphthalene ring and anthracene ring. The concrete examples of the portion (I) are as follows. 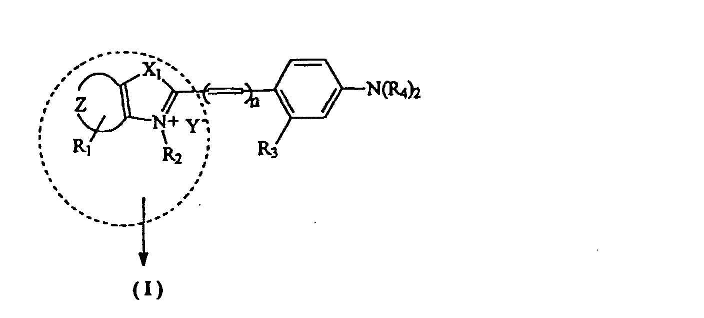 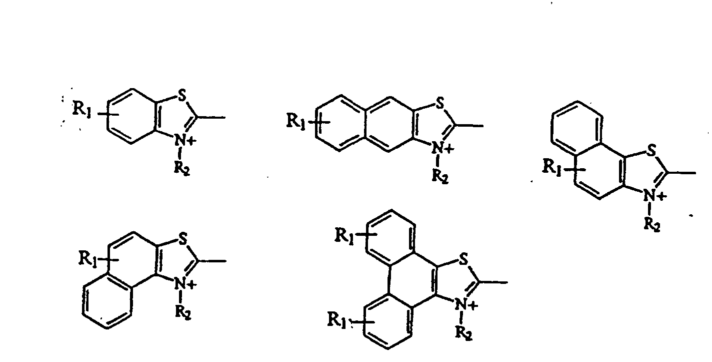 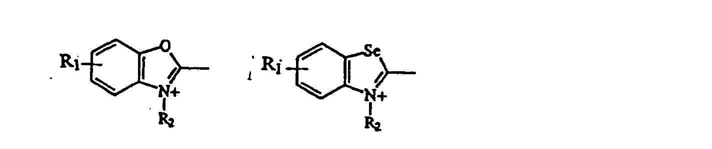 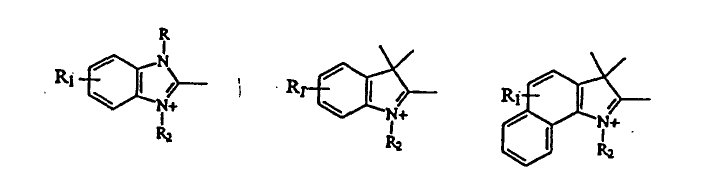 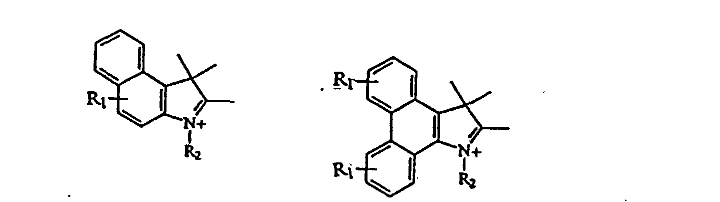 where Z is a benzene ring, naphthalene ring or anthracene ring; X₁ is S, O, Se, NR (where R is hydrogen or an alkyl group of 1 to 5 carbon atoms) or C(CH₃)₂; R₁ is hydrogen, halogen atoms, an alkyl group of 1 to 3 carbon atoms, a nitro group, an alkoxy group of 1 to 3 carbon atoms or an amine group ; each of R₂ and R₄ is an alkyl group of 1 to 5 carbon atoms; R₃ is H, OH, OCOCH₃ or OSO₂C₆H₄Cl; Y is Cl, Br, I, ClO₄, BF₄, BrO₄, PF₆, CH₃SO₃, CF₃SO₃, 4-CH₃C₆H₄SO₃, C₆H₅SO₃, 6-SO₃C₁₀H₆SO₃ or HSO₄; and *n* is an integer of 0-2.

Preferably, the hemicyanine dye having formula (1) is a compound having formula (2) or (3) below: 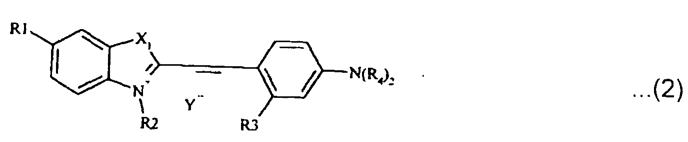 where R₁ is H, NO₂ or Cl; R₂ is CH₃, C₂H₅, C₃H₇ or C₄H₉; X₁ is C(CH₃)₂ or S; R₃ is H, OH, OCOCH₃ or OSO₂C₆H₄Cl; R₄ is C₂H₅, C₃H₇ or C₄H₉; and Y is ClO₄, BF₄, PF₆, I, Br or Cl, and 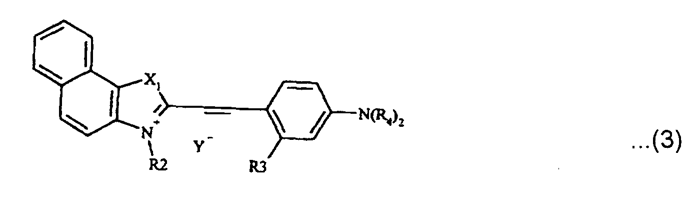 where X₁ is C(CH₃)₂; R₂ is CH₃, C₂H₅, C₃H₇ or C₄H₉; R₃ is H or OH; R₄ is C₂H₅, C₃H₇ or C₄H₉; and Y is ClO₄, BF₄, PF₆, I, Br or Cl.

The synthesis of the novel hemicyanine dye having formula (1) according to the present invention will be described with reference to the following reaction scheme (I). The hemicyanine dye having formula (1) above is obtained by condensing compounds (A) with compound (B). Compound (A) can be derived by the following process illustrated in reaction scheme (I).

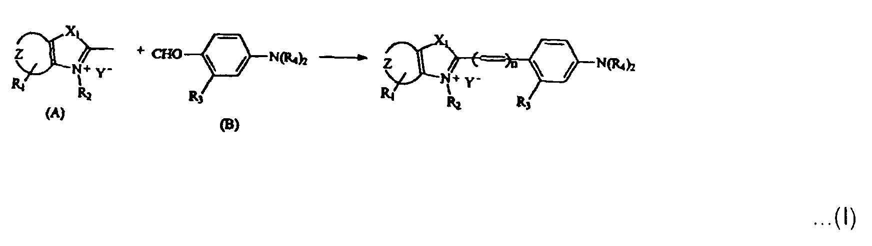

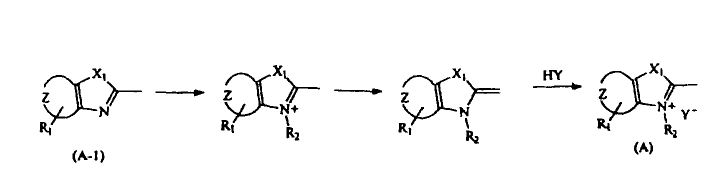

Compound (A) is obtained by N-alkylation of compound (A-1) with excess halogen compound, for example, iodomethane, iodoethane, iodopropane, iodobutane.

An optical recording medium according to the present invention, which is manufactured using the hemicyanine dye having formula (1) above as an optical recording material, is a write once read many (WORM) type optical recording medium which records and reproduces information using a laser beam, and particularly, is a DVD-R using a short wavelength laser beam as a light source.

The present invention is described in more detail with reference to the attached drawing in which:

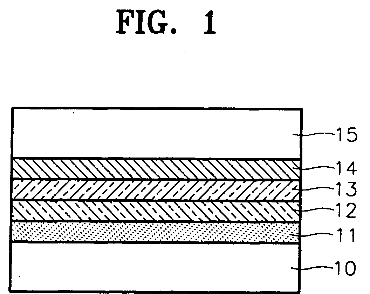

FIG. 1 is a sectional view illustrating the structure of layers stacked in an optical recording medium according to a preferred embodiment of the present invention. Referring to FIG. 1, a recording layer 11, which contains the hemicyanine dye having formula (1) above used as an optical recording medium, a reflective layer 12 and a protective layer 13 are deposited in succession over a semiconductor substrate 10.

For certain cases, a dummy substrate 15 can be attached to the optical recording medium using an adhesive layer 14. Alternatively, the optical recording medium of FIG. 1 can be combined with another optical recording medium having the same or different structure as or from that of FIG. 1. A material used for the adhesive layer 14 may be a ultraviolet (UV) curable resin, or a cationic curable resin. Also, such combination with an adhesive layer can be performed using a two-sided adhesive sheet, or by a hot-melting, spin coating, dispensing (extrusion), screen printing, or roll-coat method.

Preferably, the substrate 10 is formed of a material, which is transparent to a laser beam and easy to swell by heat, and has a strong impact resistance. Suitable materials for the substrate 10, which meet the requirements, include polycarbonate, polymethacrylate, epoxy resin, polyester resin and polyolefin resin. These materials used for the substrate 10 have a thermal deformation temperature in the range of 80-200°C, but preferably in the range of 100-200°C.

Pregrooves for guiding an incident laser beam during recording or reproducing are formed on the surface of the substrate 10. Preferably, the pregrooves have a depth of 80-250 nm, and a width of 200-500 *µ*m. Preferably, the substrate 10 has a transmittance of 60-99% more preferably 70-99%, with about 90% being preferred, and a thickness of 0.01-10 mm. If the transmittance or thickness of the substrate is beyond the above range, the optical recording medium characteristics are unfavorable.

The recording layer 11 includes an organic dye, which is physically deformed and decomposed by a recording laser beam. In the present invention, the recording layer 11 may include at least one hemicyanine dye having formula (1). As needed, the recording layer 11 can further include a singlet oxygen quencher, a light absorptive material and a radical scavenger. Preferably, the optical recording material used in the recording layer 11 has a complex refractive index, including a real part coefficient n of 1.5-2.8 and an imaginary part coefficient k of 0.01-0.4 in the wavelength range for recording and reproduction. More preferably, the optical recording material has a refractive index of 1.8-2.3 in a wavelength range of 400-700 nm. Preferably, the optical recording medium has a maximum absorption wavelength of 350-650 nm. If the complex refractive index and the maximum absorption wavelength of the optical recording material are beyond the above ranges, recording and reproducing characteristics in terms of recording sensitivity, push-pull, tracking and modulation factor are unfavorable.

The recording layer 11 is formed by spin coating a composition over a substrate. The composition for the recording layer 11 is obtained by dissolving 0.5-10% by weight hemicyanine dye having formula (1) in a solvent of 90-99.5% by weight based on the total weight of the composition. Any solvent capable of dissolving the hemicyanine dye without causing defects on the substrate can be used without limitations.

Preferably, the reflective layer 12, which ensures high reflectivity for recording or reproducing, is formed of a metal having a high reflectivity as well as a high thermal conductivity, such that the reflective layer 12 is not susceptible to deform. Suitable metals used for the reflective layer 12 include gold (Au), aluminum (Al), silver (Ag), copper (Cu), palladium (Pd), platinum (Pt), titanium (Ti), tantalum (Ta), chromium (Cr), nickel (Ni) or an alloy of these metals. Preferably, the reflective layer 12 has a thickness of 500-2500 Å. The reflective layer 12 may be formed by vacuum deposition, E-beam or sputtering.

In the present invention, the protective layer 13 serves to protect other constituents layers, and in particular, the reflective layer 12 of the optical recording medium. The protective layer 13 is formed by a common method. For example, a transparent UV curable material with strong impact resistance, such as epoxy or acrylate UV curable resin is spin-coated over the reflective layer 12, and then cured by radiation of UV rays.

The present invention will be described in greater detail by means of the following examples. The following examples are for illustrative purposes and are not intended to limit the scope of the invention.

### Example 1

2-Methylene-1,3,3-trimethylindoline was dissolved in ethyl acetate at room temperature, and HClO₄ solution was dropwise added to the mixture. The precipitate was filtered from the reaction mixture, and washed with ethyl acetate several times to obtain 1,2,3,3-tetramethylpseudoindolium perchlorate.

1.2 Equivalents 2-hydroxy-4-diethylamino-benzaldehyde, and 1 equivalent 1,2,3,3-tetramethylpseudoindolium perchlorate were dissolved in ethanol, and 1 drop of piperidine was added to the mixture. Then, the reaction mixture was reacted under reflux for 5 hours and evaporated under vacuum to remove the solvent. Then, excess ethyl acetate was added to the resultant mixture, so that violet powder was precipitated. The precipitate was washed with ethyl acetate several times, so that dye D1 of violet color having the following formula was obtained with a yield of 95%.

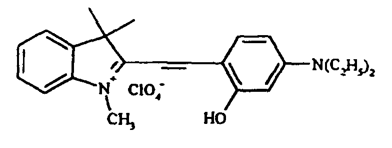

NMR (1H, DMSO): 1.18 (t, 6H), 1.70 (s, 6H), 3.50 (q, 4H), 3.84 (s, 3H), 6.24 (s, 1H), 6.52 (d, 1H), 7.16 (d, 1H), 7.42 (t, 1H), 7.52 (t, 1H), 7.60 (d, 1H), 7.70 (d, 1H), 7.93 (d, 1H), 8.40 (d, 1H)

0.3g of dye D1 was dissolved in 10 ml tetrafluoropropanol, and spin-coated over a substrate to form a dye thin film. The absorption spectrum of the obtained thin film was observed with a UV-VIS-NIR spectrophotometer (UV-3101PC, Shimadzu Co.) to detect the maximum absorption peak (λₘₐₓ). The obtained maximum absorption wavelength (λₘₐₓ), the melting temperature (Tm) and the decomposition temperature (Td) of dye D1 are shown in Table 1.

0.30 g of dye D1 and 0.04 g phenylamine series stabilizer (IRG022, Nippon Kayaku Co., Ltd) were dissolved in 10 mℓ tetrafluropropane, and stirred at room temperature for 5 hours. The mixture was filtered with a Teflon filter (having 0.2 *µ*m pore width) and spin-coated over a substrate to form a dye layer. The substrate was a polycarbonate substrate with 0.6 mm thickness having pregrooves with 150 nm depth, 300 nm width and 800 nm track pitch.

The substrate having the dye layer was dried in a vacuum oven set at 40°C for 12 hours. Then, silver (Ag) was deposited over the dye layer to form a reflective layer with a thickness of 100 nm. An acrylic UV curable resin was spin-coated over the reflective layer and then cured by radiation of UV rays to form a protective layer. The resultant substrate was combined with a dummy disk, thereby completing an optical, disk.

Characteristics of the obtained optical disk was evaluated by a DVD-R recorder (DVDR-S101, Pioneer), a dynamic characteristic evaluator (DDU-1000, Pulstec) equipped with a laser diode (LD, Nichia, Japan) having a peak wavelength of 630 nm or 650 nm, and a DVD player (DVD909, Samsung, Korea). Characteristics of the optical disk before recording were evaluated using the evaluator equipped with 635 nm LD. The results are shown in Table 1. In Table 1, Rtop indicates the maximum reflectivity, jitter indicates variations of reproduction signals, which is a signal uniformity index, I14/I14H indicates the modulated amplitude of recorded signals.

### Examples 2 through 42

Dyes D2 through D42 were synthesized and optical disks were manufactured using each of the dyes D2 through 42, in the same manner as in Example 1. The results are shown in Table 1.

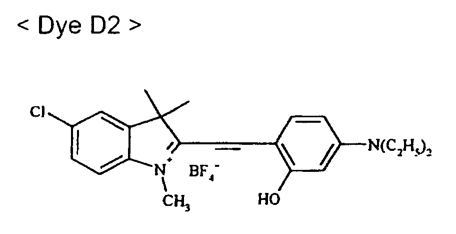

NMR (1H, DMSO): 1.20 (t, 6H), 1.72 (s, 6H), 3.52 (q, 4H), 3.80 (s, 3H), 6.24 (s, 1H), 6.54 (d, 1H), 7.12 (d, 1H), 7.58 (d, 1H), 7.62 (d, 1H), 7.88 (s, 1H), 7.94 (d, 1H), 8.40 (d, 1H)

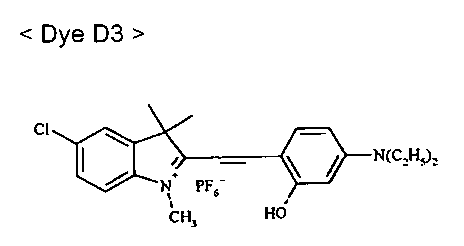

NMR (1H, DMSO): 1.20 (t, 6H), 1.72 (s, 6H), 3.52 (q, 4H), 3.80 (s, 3H), 6.24 (5, 1H), 6.54 (d, 1H), 7.12 (d, 1H), 7.58 (d, 1H), 7.62 (d, 1H), 7.88 (s, 1H), 7.94 (d, 1H), 8.40 (d, 1H)

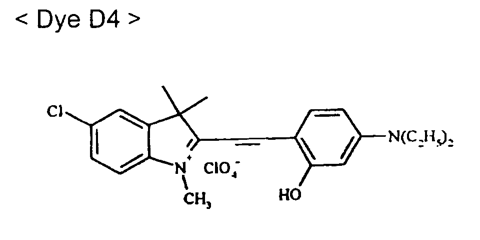

NMR (1H, DMSO): 1.20 (t, 6H), 1.72 (s, 6H), 3.52 (q, 4H), 3.80 (s, 3H), 6.24 (5, 1H), 6.54 (d, 1H), 7.12 (d, 1H), 7.58 (d, 1H), 7.62 (d, 1H), 7.88 (S, 1H), 7.94 (d, 1H), 8.40 (d, 1H)

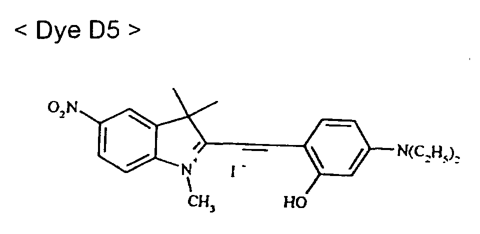

NMR (1H, DMSO): 1.20 (t, 6H), 1.73 (s, 6H), 3.54 (q, 4H), 3.80 (s, 3H), 6.26 (s, 1H), 6.64 (d, 1H), 7.10 (d, 1H), 7.72 (d, 1H), 8.02 (d, 1H), 8.40 (d, 1H), 8.48 (d, 1H), 8.62 (s, 1H)

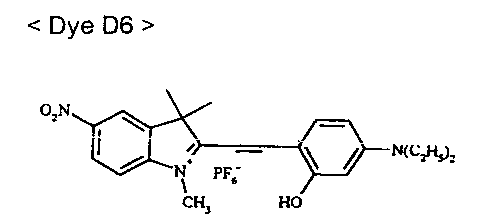

NMR (1H, DMSO): 1.20 (t, 6H), 1.73 (s, 6H), 3.54 (q, 4H), 3.80 (s, 3H), 6.26 (s, 1H), 6.64 (d, 1H), 7.10 (d, 1H), 7.72 (d, 1H), 8.02 (d, 1H), 8.40 (d, 1H), 8.48 (d, 1H), 8.62 (s, 1H)

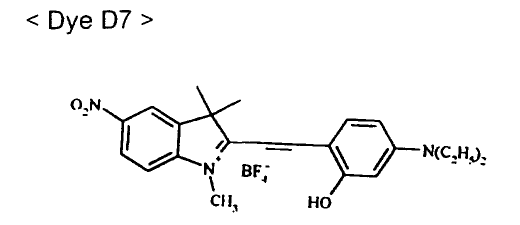

NMR (1H, DMSO): 1.20 (t, 6H), 1.73 (s, 6H), 3.54 (q, 4H), 3.80 (s, 3H), 6.26 (s, 1H), 6.64 (d, 1H), 7.10 (d, 1H), 7.72 (d, 1H), 8.02 (d, 1H), 8.40 (d, 1H), 8.48 (d, 1H), 8.62 (s, 1H)

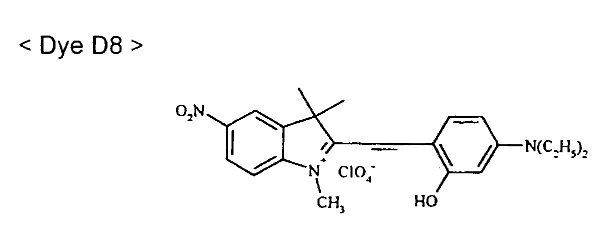

NMR (1H, DMSO): 1.20 (t, 6H), 1.73 (s, 6H), 3.54 (q, 4H), 3.80 (s, 3H), 6.26 (s, 1H), 6.64 (d, 1H), 7.10 (d, 1H), 7.72 (d, 1H), 8.02 (d, 1H), 8.40 (d, 1H), 8.48 (d, 1H), 8.62 (s, 1H)

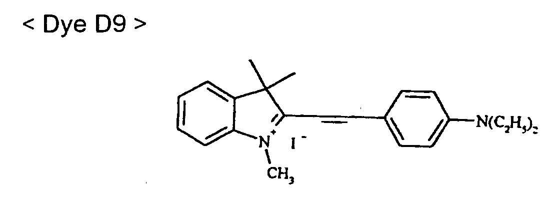

NMR (1H, DMSO): 1.24 (t, 6H), 1.80 (s, 6H), 3.60 (q, 4H), 4.00 (s, 3H), 6.94 (d, 2H), 7.26 (d, 1H), 7.52 (t, 1H), 7.60 (t, 1H), 7.74 (d, 1H), 7.82 (d, 1H), 8.08 (d, 2H), 8.36 (d, 1H)

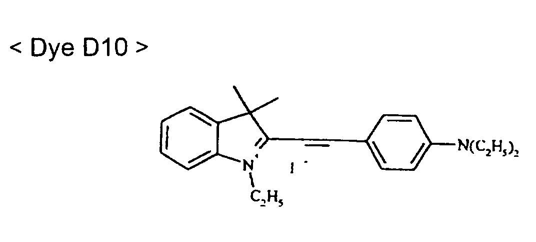

NMR (1H, DMSO): 1.24 (t, 6H), 1.44 (t, 3H), 1.80 (s, 6H), 3.62 (q, 4H), 4.58 (q, 2H), 6.92 (d, 2H), 7.26 (d, 1H), 7.54 (t, 1H), 7.60 (t, 1H), 7.76 (d, 1H), 7.82 (d, 1H), 8.12 (d, 1H), 8.38 (d, 1H)

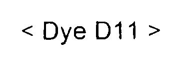

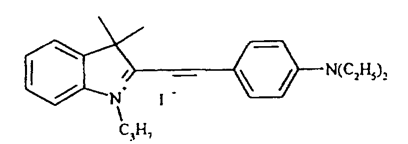

NMR (1H, DMSO): 0.99 (t, 3H), 1.24 (t, 6H), 1.48 (m, 2H), 1.82 (s, 6H), 3.62 (q, 4H), 6.94 (d, 2H), 7.26 (d, 1H), 7.52 (t, 1H), 7.60 (t, 1H), 7.76 (d, 1H), 7.82 (d, 1H), 8.12 (d, 2H), 8.38 (d, 1H)

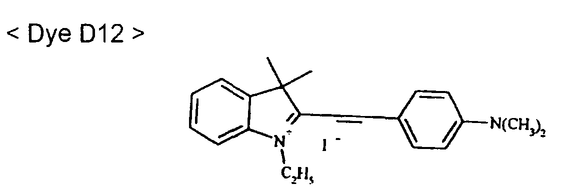

NMR (1H, DMSO): 1.44 (t, 3H), 1.82 (s, 6H), 3.24 (s, 6H), 4.60 (q, 2H), 6.94 (d, 2H), 7.32 (d, 1H), 7.54 (t, 1H), 7.60 (t, 1H), 7.78 (d, 1H), 7.84 (d, 1H), 8.18 (d, 2H), 8.40 (d, 1H)

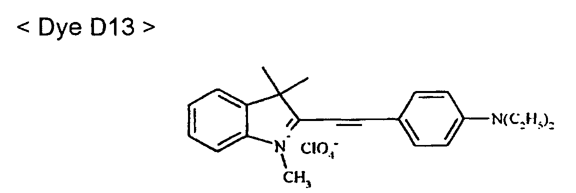

NMR (1H, DMSO): 1.18 (t, 6H), 1.74 (s, 6H), 3.54 (q, 4H), 3.96 (s, 3H), 6.86 (d, 2H), 7.20 (d, 1H), 7.46 (t, 1H), 7.56 (t, 1H), 7.68 (d, 1H), 7.76 (d, 1H), 8.04 (d, 2H), 8.26 (d, 1H)

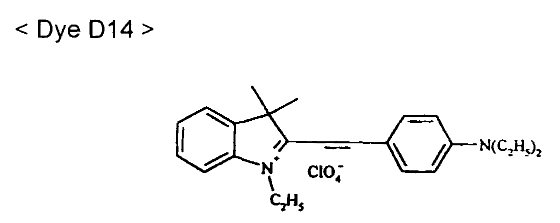

NMR (1H, DMSO): 1.24 (t, 6H), 1.44 (t, 3H), 1.80 (s, 6H), 3.62 (q, 4H), 4.58 (q, 2H), 6.92 (d, 2H), 7.26 (d, 1H), 7.54 (t, 1H), 7.60 (t, 1H), 7.76 (d, 1H), 7.82 (d, 1H), 8.12 (d, 1H), 8.38 (d, 1H)

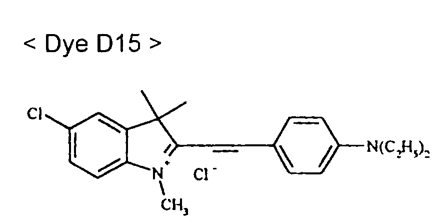

NMR (1H, DMSO): 1.18 (t, 6H), 1.74 (s, 6H), 3.54 (q, 4H), 3.92 (s, 3H), 6.88 (d, 1H), 7.18 (d, 1H), 7.60 (d, 1H), 7.68 (d, 1H), 7.92 (s, 1H), 8.16 (d, 1H), 8.30 (d, 1H)

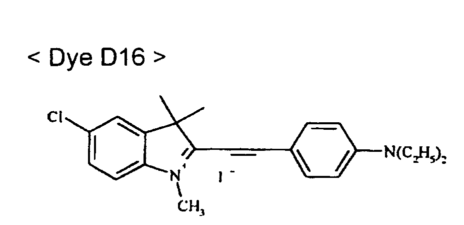

NMR (1H, DMSO): 1.18 (t, 6H), 1.74 (s, 6H), 3.54 (q, 4H), 3.92 (s, 3H), 6.88 (d, 1H), 7.18 (d, 1H), 7.60 (d, 1H), 7.68 (d, 1H), 7.92 (s, 1H), 8.16 (d, 1H), 8.30 (d, 1H)

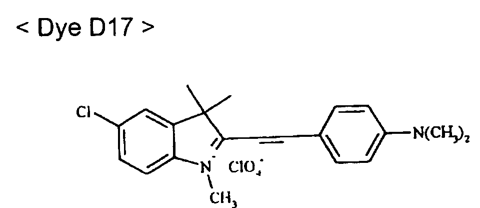

NMR (1H, DMSO): 1.18 (t, 6H), 1.74 (s, 6H), 3.54 (q, 4H), 3.92 (s, 3H), 6.88 (d, 1H), 7.18 (d, 1H), 7.60 (d, 1H), 7.68 (d, 1H), 7.92 (s, 1H), 8.16 (d, 1H), 8.30 (d, 1H)

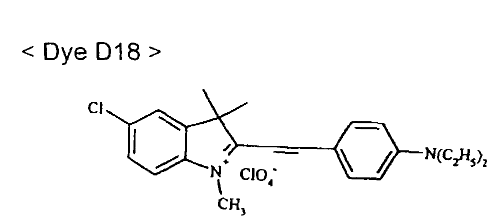

NMR (1H, DMSO): 1.18 (t, 6H), 1.74 (s, 6H), 3.54 (q, 4H), 3.92 (s, 3H), 6.88 (d, 1H), 7.18 (d, 1H), 760 (d, 1H), 7.68 (d, 1H), 7.92 (s, 1H), 8.16 (d, 1H), 8.30 (d, 1H)

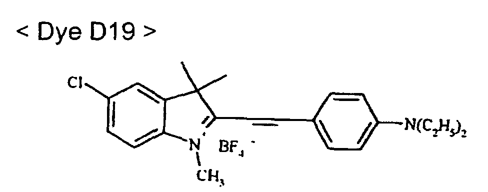

NMR (1H, DMSO): 1.18 (t, 6H), 1.74 (s, 6H), 3.54 (q, 4H), 3.92 (s, 3H), 6.88 (d, 1H), 7.18 (d, 1H), 7.60 (d, 1H), 7.68 (d, 1H), 7.92 (s, 1H), 8.16 (d, 1H), 8.30 (d, 1H)

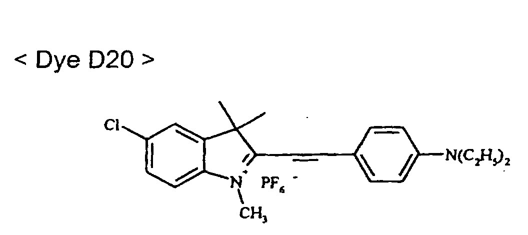

NMR (1H, DMSO): 1.18 (t, 6H), 1.74 (s, 6H), 3.54 (q, 4H), 3.92 (s, 3H), 6.88 (d, 1H), 7.18 (d, 1H), 7.60 (d, 1H), 7.68 (d, 1H), 7.92 (s, 1H), 8.16 (d, 1H), 8.30 (d, 1H)

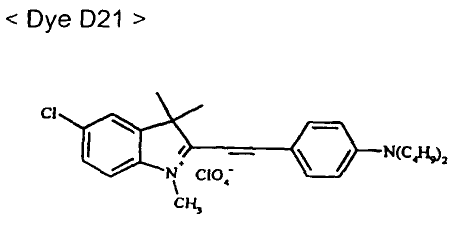

NMR (1H, DMSO): 1.00 (t, 6H), 1.44 (m, 4H), 1.64 (m, 4H), 1.80 (s, 6H), 3.58 (t, 4H), 3.98 (s, 3H), 6.94 (d, 2H), 7.24 (d, 1H), 7.66 (d, 1H), 7.76 (d, 1H), 8.02 (s, 1H), 8.10 (d, 2H), 8.38 (d,1H)

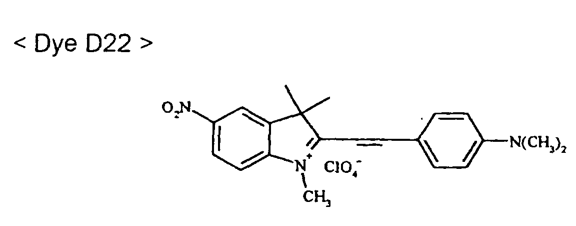

NMR (1H, DMSO): 1.82 (s, 6H), 3.24 (s, 6H), 3.92 (s, 3H), 6.96 (d, 2H), 7.24 (d, 1H), 7.82 (d, 1H), 8.14 (d, 2H), 8.42 (d, 1H), 8.44 (d, 1H), 8.70 (s, 1H)

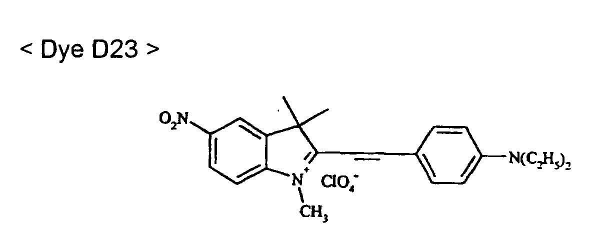

NMR (1H, DMSO): 1.22 (t, 6H), 1.82 (s, 6H), 3.62 (q, 4H), 3.92 (s, 3H), 6.96 (d, 2H), 7.20 (d, 1H), 7.80 (d, 1H), 8.14 (d, 2H), 8.40 (d, 1H), 8.42 (d, 1H), 8.70 (s, 1H)

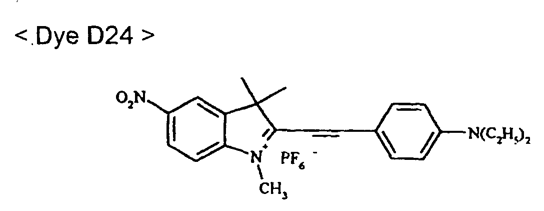

NMR (1H, DMSO): 1.22 (t, 6H), 1.82 (s, 6H), 3.62 (q, 4H), 3.92 (s, 3H), 6.96 (d, 2H), 7.20 (d, 1H), 7.80 (d, 1H), 8.14 (d, 2H), 8.40 (d, 1H), 8.42 (d, 1H), 8.70 (s, 1H)

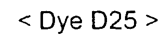

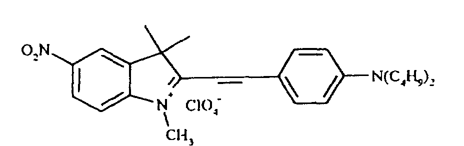

NMR (1H, DMSO): 0.94 (t, 6H), 1.28 (m, 4H), 1.60 (m, 4H), 1.80 (s, 6H), 3.56 (t, 4H), 3.92 (s, 3H), 6.92 (d, 2H), 7.20 (d, 1H), 7.80 (d, 1H), 8.12 (d, 2H), 8.40 (d, 1H), 8.39 (d, 1H), 8.68 (s, 1H)

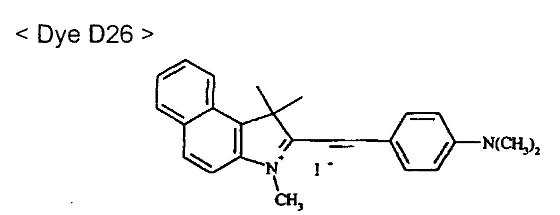

NMR (1H, DMSO): 2.06 (s, 6H), 3.22 (s, 6H), 4.16 (s, 3H), 6.94 (d, 2H), 7.36 (d, 1H), 7.72 (t, 1H), 7.82 (t, 1H), 8.02 (d, 1H), 8.14 (d, 2H), 8.22 (d, 1H), 8.28 (d, 1H), 8.42 (d, 1H), 8.46 (d, 1H)

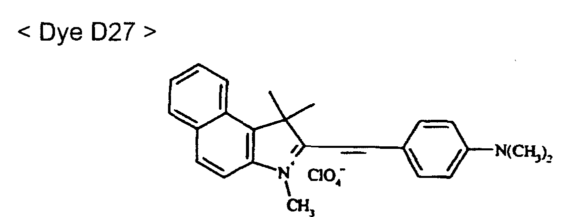

NMR (1H, DMSO): 2.06 (s, 6H), 3.22 (s, 6H), 4.16 (s, 3H), 6.94 (d, 2H), 7.36 (d, 1H), 7.72 (t, 1H), 7.82 (t, 1H), 8.02 (d, 1H), 8.14 (d, 2H), 8.22 (d, 1H), 8.28 (d, 1H), 8.42 (d, 1H), 8.46 (d, 1H)

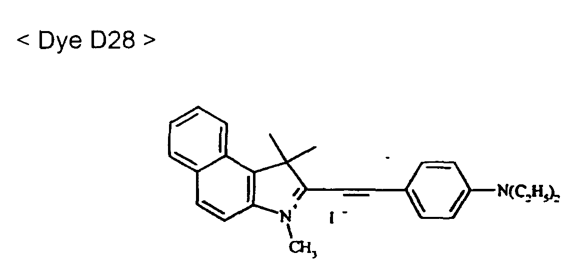

NMR (1H, DMSO): 1.18 (t, 6H), 1.96 (s, 6H), 3.50 (q, 4H), 3.96 (s, 3H), 6.26 (s, 1H), 6.52 (d, 1H), 7.20 (d, 1H), 7.60 (t, 1H), 7.72 (t, 1H), 7.92 (d, 1H), 7.98 (d, 1H), 8.12 (d, 1H), 8.18 (d, 1H), 8.34 (d, 1H), 8.52 (d, 1H)

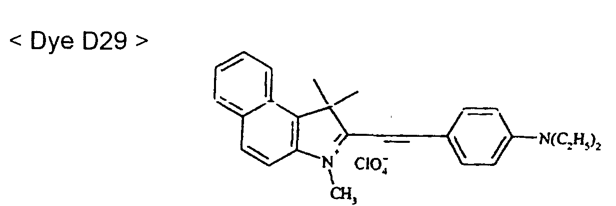

NMR (1H, DMSO): 1.18 (t, 6H), 1.96 (s, 6H), 3.50 (q, 4H), 3.96 (s, 3H), 6.26 (s, 1H), 6.52 (d, 1H), 7.20 (d, 1H), 7.60 (t, 1H), 7.72 (t, 1H), 7.92 (d, 1H), 7.98 (d, 1H), 8.12 (d, 1H), 8.18 (d, 1H), 8.34 (d, 1H), 8.52 (d, 1H)

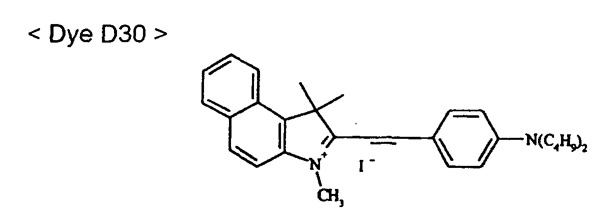

NMR (1H, DMSO): 1.00 (t, 3H), 1.40 (m, 2H), 1.64 (m, 2H), 1.80 (s, 6H), 3.55 (t, 2H), 4.13 (s, 3H), 6.91 (d, 2H), 7.30 (d, 1H), 7.79 (t, 1H), 7.84 (t, 1H), 8.01 (d, 1H), 8.14 (d, 2H), 8.20 (d, 1H), 8.26 (d, 1H), 8.36 (d, 1H), 8.42 (d, 1H)

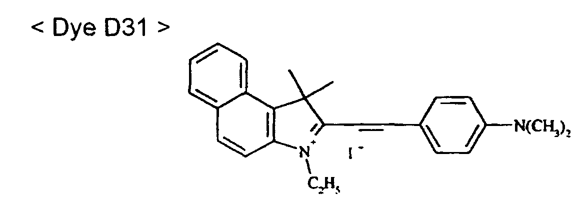

NMR (1H, DMSO): 1.51 (t, 3H), 2.06 (s, 6H), 3.35 (s, 6H), 4.73 (q, 2H), 6.95 (d, 2H), 7.36 (d, 1H), 7.73 (t, 1H), 7.83 (t, 1H), 8.04 (d, 1H), 8.16 (d, 2H), 8.22 (d, 1H), 8.28 (d, 1H), 8.42 (d, 1H), 8.48 (d, 1H)

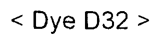

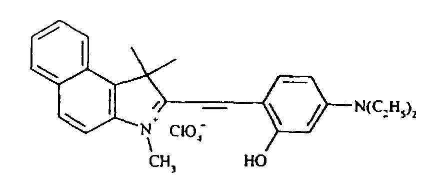

NMR (1H, DMSO): 1.80 (t, 6H), 1.94 (s, 6H), 3.48 (q, 4H), 3.98 (s, 3H), 6.24 (s, 1H), 6.54 (d, 1H), 7.22 (d, 1H), 7.60 (t, 1H), 7.72 (t, 1H), 7.92 (d, 1H), 7.98 (d, 1H), 8.14 (d, 1H), 8.18 (d, 1H), 8.36 (d, 1H), 8.52 (d, 1H)

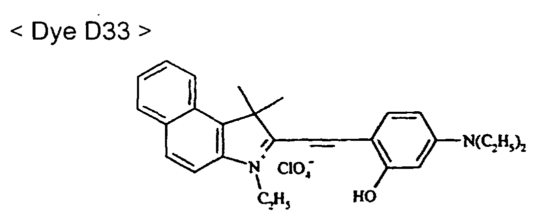

NMR (1H, DMSO): 1.08 (t, 6H), 1.51 (t, 3H), 2.06 (s, 6H), 3.48 (q, 4H), 4.73 (q, 2H), 6.95 (d, 2H), 7.36 (d, 1H), 7.73 (t, 1H), 7.83 (t, 1H), 8.04 (d, 1H), 8.16 (d, 2H), 8.22 (d, 1H), 8.28 (d, 1H), 8.42 (d, 1H), 8.48 (d, 1H)

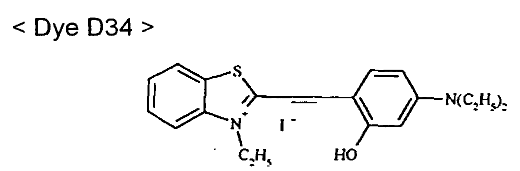

NMR (1H, DMSO): 1.16 (t, 6H), 1.40 (t, 3H), 3.44 (q, 4H), 4.72 (q, 2H), 6.22 (s, 1H), 6.44 (d, 1H), 7.46 (d, 1H), 7.64 (s, 1H), 7.74 (d, 1H), 7.86 (d, 1H), 8.06 (d, 1H), 8.18 (d, 1H), 8.22 (d, 1H)

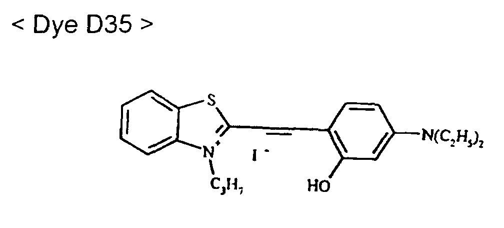

NMR (1H, DMSO): 0.94 (t, 3H), 1.16 (t, 6H), 1.26 (m, 2H), 1.80 (m, 2H), 3.44 (q, 4H), 4.66 (t, 2H), 6.22 (s, 1H), 6.46 (d, 1H), 7.48 (d, 1H), 7.63 (t, 1H), 7.72 (t, 1H), 7.80 (d, 1H), 8.04 (d, 1H), 8.12 (d, 1H), 8.20 (d, 1H)

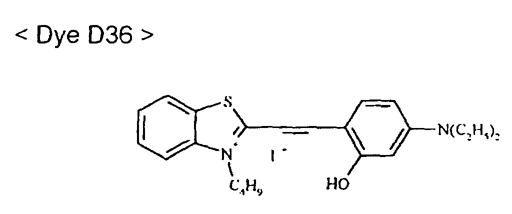

NMR (1H, DMSO): 1.02 (t, 3H), 1.16 (t, 6H), 1.86 (m, 2H), 3.44 (q, 4H), 4.76 (t, 2H), 6.84 (d, 2H), 7.48 (d, 1H), 7.66 (t, 1H), 7.76 (t, 1H), 7.90 (d, 1H), 8.06 (d, 1H), 8.16 (d, 1H), 8.28 (d, 1H)

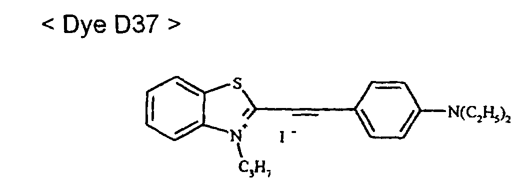

NMR (1H, DMSO): 1.02 (t, 3H), 1.08 (t, 6H), 1.86 (m, 2H), 3.54 (q, 4H), 4.76 (t, 2H), 6.84 (d, 2H), 7.48 (d, 1H), 7.66 (t, 1H), 7.76 (t, 1H), 7.90 (d, 1H), 8.06 (d, 1H), 8.16 (d,1H), 8.28 (d,1H)

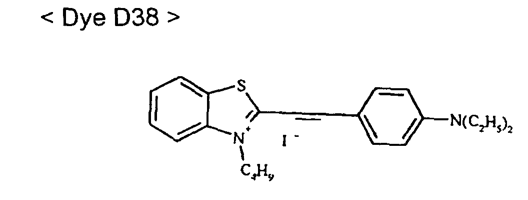

NMR (1H, DMSO): 0.92 (t, 3H), 1.16 (t, 6H), 1.44 (m, 2H), 1.80 (m, 1H), 3.52 (q, 4H), 4.80 (t, 2H), 6.84 (d, 2H), 7.56 (d, 1H), 7.66 (t, 1H), 7.76 (t, 1H), 7.90 (d, 2H), 8.06 (d, 1H), 8.12 (d, 1H), 8.30 (d, 1H)

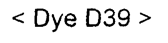

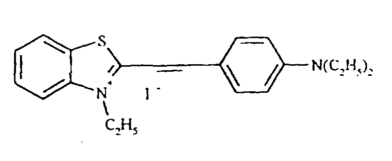

NMR (1H, DMSO): 1.16 (t, 6H), 1.42 (t, 3H), 3.52 (q, 4H), 3.82 (q, 2H), 6.84 (d, 2H), 7.60 (d, 1H), 7.68 (t, 1H), 7.78 (t, 1H), 7.92 (d, 2H), 8.08 (d, 1H), 8.12 (d, 1H), 8.28 (d, 1H)

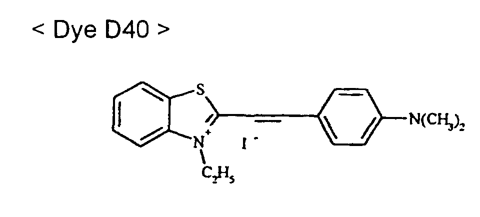

NMR (1H, DMSO): 1.48 (t, 3H), 3.18 (s, 6H), 4.88 (q, 2H), 6.88 (d, 2H), 7.66 (d, 1H), 7.74 (d, 1H), 7.84 (t, 1H), 8.00 (d, 2H), 8.14 (d, 1H), 8.18 (d, 1H), 8.38 (d, 1H)

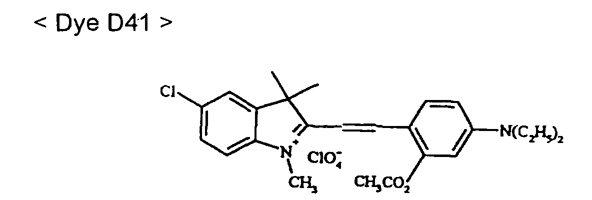

NMR (1H, DMSO): 1.22 (t, 6H), 1.74 (s, 6H), 2.48 (s, 3H), 3.60 (q, 4H), 4.00 (s, 3H), 6.76 (s, 1H), 6.88 (d, 1H), 7.28 (d, 1H), 7.66 (d, 1H), 7.80 (d, 1H), 7.98 (s, 1H), 8.04 (d, 1H), 8.26 (d, 1H)

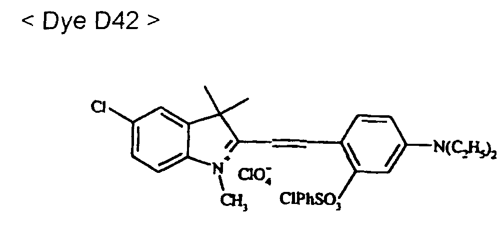

NMR (1H, DMSO): 1.04 (t, 6H), 1.78 (s, 6H), 3.42 (q, 4H), 4.04 (s, 3H), 6.04 (s, 1H), 6.92 (d, 1H), 7.40 (d, 1H), 7.70 (d, 1H), 7.82 (d, 1H), 7.88 (d, 2H), 8.04 (s, 1H), 8.06 (d, 2H), 8.26 (d, 1H), 8.36 (d, 1H)

**Table 1**

| Example | Dye | λₘₐₓ | Tm (°C) | Td (°C) | Rtop | Jitter (%) | I14/I14H |
|---|---|---|---|---|---|---|---|
| Example 1 | D1 | 585 | 225 | 243 | - | - | - |
| Example 2 | D2 | 591 | - | 234 | 56 | 10 | 65 |
| Example 3 | D3 | 587 | 198 | 233 | 54 | 9 | 68 |
| Example 4 | D4 | 593 | 241 | 246 | 53 | 7.0 | 72 |
| Example 5 | D5 | 622 | - | 216 | - | - | - |
| Example 6 | D6 | 613 | - | 218 | 46 | 8.5 | 67 |
| Example 7 | D7 | 615 | 193 | 231 | 47 | 8.0 | 69 |
| Example 8 | D8 | 614 | - | 249 | 46 | 7.6 | 65 |
| Example 9 | D9 | 584 | 146 | 225 | - | - | - |
| Example 10 | D10 | 591 | - | 238 | - | - | - |
| Example 11 | D11 | 590 | 212 | 217 | - | - | - |
| Example 12 | D12 | 590 | - | 238 | - | - | - |
| Example 13 | D13 | 579 | 154 | 218 | - | - | - |
| Example 14 | D14 | 588 | 198 | 241 | - | - | - |
| Example 15 | D15 | 590 | 160 | 206 | 56 | 13 | 61 |
| Example 16 | D16 | 609 | 223 | 230 | 52 | 14 | 60 |
| Example 17 | D17 | 590 | 247 | 250 | 54 | 9.0 | 65 |
| Example 18 | D18 | 588 | 219 | 231 | 57 | 8.1 | 67 |
| Example 19 | D19 | 594 | 223 | 238 | 54 | 11 | 60 |
| Example 20 | D20 | 595 | 223 | 238 | 53 | 11 | 63 |
| Example 21 | D21 | 594 | 192 | 255 | 55 | 10 | 60 |
| Example 22 | D22 | 640 | - | 278 | - | - | - |
| Example 23 | D23 | 630 | 191 | 232 | - | - | - |
| Example 24 | D24 | 629 | 220 | 227 | - | - | - |
| Example 25 | D25 | 631 | 172 | 237 | - | - | - |
| Example 26 | D26 | 601 | - | 255 | 50 | 13 | 52 |
| Example 27 | D27 | 598 | - | 255 | 48 | 9.0 | 60 |
| Example 28 | D28 | 607 | 188 | 214 | 46 | 12 | 55 |
| Example 29 | D29 | 602 | - | 210 | 47 | 8.5 | 63 |
| Example 30 | D30 | 601 | - | 207 | 48 | 12 | 57 |
| Example 31 | D31 | 603 | 159 | 229 | 49 | 13 | 57 |
| Example 32 | D32 | 600 | 231 | 243 | 49 | 8.0 | 61 |
| Example 33 | D33 | 598 | - | 230 | 50 | 8.3 | 62 |
| Example 34 | D34 | 538 | - | 241 | - | - | - |
| Example 35 | D35 | 539 | 209 | 232 | - | - | - |
| Example 36 | D36 | 542 | 109 | 234 | - | - | - |
| Example 37 | D37 | 523 | - | 225 | - | - | - |
| Example 38 | D38 | 519 | - | 219 | - | - | - |
| Example 39 | D39 | 518 | - | 226 | - | - | - |
| Example 40 | D40 | 518 | - | 256 | - | - | - |
| Example 41 | D41 | 588 | 234 | 245 | - | - | - |
| Example 42 | D42 | 573 | - | 163 | - | - | _ |

As shown in Table 1, the recording characteristics, including jitter, of the optical disks of Examples 1 through 42, which were evaluated using the DVD-R recorder, are excellent. Also, the reproduction characteristics of the optical disks of Examples 1 through 42, evaluated with the DVD player, ensures that the optical disks are compatible with DVD players.

As previously mentioned, the novel hemicyanine dye having formula (1) above is easy to synthesize with high yield. Thus, use of the hemicyanine dye as an optical recording material in manufacturing optical recording media can reduce the manufacturing cost, compared to when a conventional optical recording material is adopted.

While this invention has been particularly shown and described with reference to preferred embodiments thereof, it will be understood by those skilled in the art that various changes in form and details may be made thereto without departing from the spirit and scope of the invention as defined by the appended claims.

## Claims

1. A hemicyanine dye having formula (1): 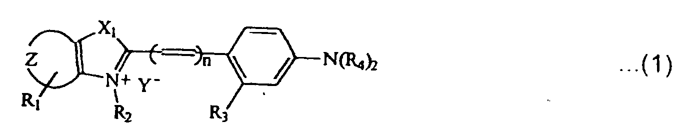 where Z is a benzene ring, naphthalene ring or anthracene ring; X₁ is S, O, Se, NR or C(CH₃)₂, where R is hydrogen or an alkyl group of 1 to 5 carbon atoms; R₁ is hydrogen, a halogen atom, an alkyl group of 1 to 3 carbon atoms, a nitro group, an alkoxy group of 1 to 3 carbon atoms or an amine group; each of R₂ and R₄ is an alkyl group of 1 to 5 carbon atoms; R₃ is H, OH, OCOCH₃ or OSO₂C₆H₄Cl; Y is Cl, Br, I, ClO₄, BF₄, BrO₄, PF₆, CH₃SO₃, CF₃SO₃, 4-CH₃C₆H₄SO₃, C₆H₅SO₃, 6-SO₃C₁₀H₆SO₃ or HSO₄; and n is an integer of 0-2.

2. The hemicyanine dye of claim 1, wherein the hemicyanine dye having formula (1) is a compound having formula (2) or (3): 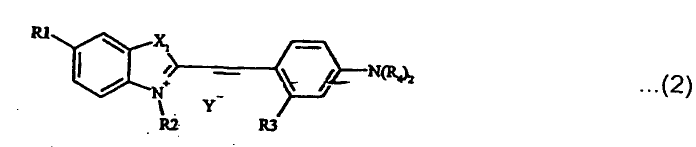 where R₁ is H, NO₂ or Cl; R₂ is CH₃, C₂H₅, C₃H₇ or C₄H₉; X₁ is C(CH₃)₂ or S; R₃ is H, OH, OCOCH₃ or OSO₂C₆H₄Cl; R₄ is C₂H₅, C₃H₇ or C₄H₉; and Y is ClO₄, BF₄, PF₆, I, Br or Cl, and 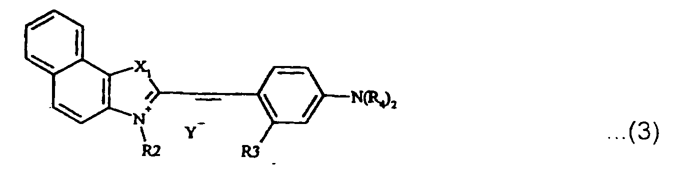 where X₁ is C(CH₃)₂; R₂ is CH₃, C₂H₅, C₃H₇ or C₄H₉; R₃ is H or OH; R₄ is C₂H₅, C₃H₇ or C₄H₉; and Y is ClO₄, BF₄, PF₆, I, Br or Cl.

3. An optical recording medium comprising a transparent substrate with grooves, a recording layer including a laser absorptive dye, formed over the transparent substrate, and a reflective layer and a protective layer formed over the recording layer, wherein the dye of the recording layer is a hemicyanine dye according to claim 1 or 2.

4. The optical recording medium accoridng to claim 3, wherein the hemicyanine dye shows a maximum absorption in the wavelength range of 350-650 nm, and has a reflective index of 1.8-2.3 in the wavelength range of 400-700 nm.

5. The optical recording medium according to claim 3 or 4, wherein the substrate has a transmittance of 70-99%, and a thickness of 0.01-10 mm.

6. The optical recording medium according to claim 5, wherein the substrate has a transmittance of about 90%.
